(19) Europäisches Patentamt
European Patent Office
Office européen des brevets

(11) EP 4 428 569 A1

(12) **EUROPEAN PATENT APPLICATION**
published in accordance with Art. 153(4) EPC

(43) Date of publication:
**11.09.2024 Bulletin 2024/37**

(21) Application number: **22887227.1**

(22) Date of filing: **31.10.2022**

(51) International Patent Classification (IPC):
**G01S 7/497** (2006.01)   **G01S 7/484** (2006.01)
**G01S 17/931** (2020.01)

(52) Cooperative Patent Classification (CPC):
**G01S 7/484; G01S 7/497; G01S 17/931**

(86) International application number:
**PCT/JP2022/040808**

(87) International publication number:
**WO 2023/074902 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.11.2021 JP 2021178892**

(71) Applicant: **KOITO MANUFACTURING CO., LTD.**
**Minato-ku**
**Tokyo 108-8711 (JP)**

(72) Inventor: **WAMA Takenori**
**Shizuoka-shi, Shizuoka 424-8764 (JP)**

(74) Representative: **Hoffmann Eitle**
**Patent- und Rechtsanwälte PartmbB**
**Arabellastraße 30**
**81925 München (DE)**

(54) **ACTIVE SENSOR, OBJECT IDENTIFICATION SYSTEM, AND VEHICULAR LAMP**

(57) An optical system 114 irradiates a controllable irradiation range A with emitted light from a semiconductor light source 112. A light sensor 120 detects reflected light L2 from an object that reflects the emitted light of the optical system 114. A light distribution controller 116 controls the optical system 114 so that the irradiation range A is narrowed in accordance with a decrease in output of the semiconductor light source 112.

FIG.1

EP 4 428 569 A1

**Description**

TECHNICAL FIELD

The present disclosure relates to an active sensor.

BACKGROUND ART

An object identification system that senses a position and a type of an object around a vehicle is used for automatic driving or automatic control of a light distribution of a headlamp. The object identification system includes a sensor and an arithmetic processing device that analyzes an output of the sensor. The sensor is selected from a camera, a light detection and ranging or laser imaging detection and ranging (LiDAR), a millimeter-wave radar, an ultrasonic sonar, and the like, considering use, required accuracy, and cost.

The sensor includes a passive sensor and an active sensor. The passive sensor detects light emitted by an object or light reflected by an object from environmental light, and the sensor itself does not emit light. On the other hand, the active sensor irradiates an object with illumination light and detects reflected light thereof. The active sensor mainly includes a light projector (illuminator) that irradiates an object with light and a light sensor that detects reflected light from the object. The active sensor has an advantage of being able to increase resistance to disturbances over the passive sensor by matching a wavelength of the illumination light and a sensitivity wavelength range of the sensor.

SUMMARY OF INVENTION

TECHNICAL PROBLEM

The illumination light is configured by a semiconductor light source such as a laser diode (LD). An output (light flux) of the semiconductor light source, that is, an amount of illumination light decreases as a temperature of the semiconductor light source rises. When the illuminance of light irradiated to an object decreases, the accuracy of object sensing decreases.

In addition, if power (driving current) supplied to the semiconductor light source is increased in order to compensate for the decrease in the amount of illumination light, further heat generation is induced.

The present disclosure has been made in view of the related problems, and one of the exemplary purposes of one aspect thereof is to provide an active sensor that can suppress a decrease in accuracy of object sensing accompanying a rise in temperature.

SOLUTION TO PROBLEM

An aspect of the present disclosure relates to an active sensor. The active sensor includes a semiconductor light source, an optical system configured to irradiate a controllable irradiation range with emitted light from the semiconductor light source, a light sensor configured to detect reflected light from an object that reflects the emitted light of the optical system, and a light distribution controller configured to control the optical system so that the irradiation range is narrowed in accordance with a decrease in an output of the semiconductor light source.

Note that optional combinations of the constituent elements described above and mutual substitutions of constituent elements or expressions among methods, apparatuses, systems or the like are also valid as aspects of the present invention or present disclosure. Furthermore, the description of this item (SUMMARY OF INVENTION) does not describe all the indispensable features of the present invention, and therefore, the sub-combinations of these features described can also be the present invention.

ADVANTAGEOUS EFFECTS OF INVENTION

According to one aspect of the present disclosure, it is possible to suppress a decrease in accuracy of sensing.

BRIEF DESCRIPTION OF DRAWINGS

FIG. 1 is a block diagram of an active sensor according to an embodiment.
FIGS. 2A and 2B are views illustrating an operation of the active sensor of FIG. 1.
FIG. 3 is a view showing an example of a change in light distribution of the active sensor of FIG. 1.
FIG. 4 is a block diagram of a time of flight (ToF) camera according to one embodiment.
FIG. 5 is a view illustrating an operation of the ToF camera.
FIGS. 6A and 6B are views illustrating images obtained by the ToF camera.
FIG. 7 is a block diagram of an active sensor according to a first embodiment.
FIG. 8 is a block diagram of an active sensor according to a second embodiment.
FIGS. 9A to 9C are views illustrating examples of control of an irradiation range based on image data IMG.
FIG. 10 is a block diagram of an active sensor according to a third embodiment.
FIG. 11 is a diagram showing a vehicle lamp with a built-in active sensor.
FIG. 12 is a block diagram showing a vehicle lamp including an object identification system.

DESCRIPTION OF EMBODIMENTS

<Outline of Embodiments>

An outline of several exemplary embodiments of the present disclosure will be described. The outline is a simplified explanation regarding several concepts of one or multiple embodiments as an introduction to the detailed description described below in order to provide a basic understanding of the embodiments, and is by no means intended to limit the scope of the present invention or disclosure. Furthermore, the outline is by no means a comprehensive outline of all conceivable embodiments, and does not limit the essential components of the embodiments. For convenience, in some cases, "one embodiment" as used herein refers to a single embodiment (embodiment or modified variation) or a plurality of embodiments (embodiments or variations) disclosed in the present specification.

An active sensor according to an embodiment includes a semiconductor light source, an optical system configured to irradiate a controllable irradiation range with emitted light from the semiconductor light source, a light sensor configured to detect reflected light from an object that reflects the emitted light of the optical system, and a light distribution controller configured to control the optical system so that the irradiation range is narrowed in accordance with a decrease in an output of the semiconductor light source.

According to this configuration, when the output of the semiconductor light source is decreased, the irradiation range is narrowed and the output light of the semiconductor light source is concentrated on a part of a field of view, thereby suppressing a decrease in illuminance and, in exchange for a sensing range, suppressing a decrease in sensing accuracy within the irradiation range.

In one embodiment, the light distribution controller may be configured to narrow the irradiation range as a temperature of the semiconductor light source rises. By monitoring the temperature of the semiconductor light source, a decrease in the output of the semiconductor light source can be estimated, so the irradiation range can be controlled adaptively.

In one embodiment, the light distribution controller may be configured to narrow the irradiation range in accordance with a decrease in an output of the light sensor. By monitoring the output of the light sensor, a decrease in illuminance can be detected.

In one embodiment, the light sensor may be an image sensor, and an output of the light sensor may be a pixel value of a predetermined object included in an image of the image sensor.

In one embodiment, the light distribution controller may widen the irradiation range when the output of the light sensor exceeds a first threshold value after narrowing the irradiation range. In one embodiment, the light distribution controller may widen the irradiation range when a predetermined time has elapsed after narrowing the irradiation range.

In one embodiment, an arithmetic processing device at a subsequent stage of the active sensor may stop arithmetic processing based on an output of the active sensor, when the output of the light sensor is lower than a second threshold value after narrowing the irradiation range to a limit. Examples of the arithmetic processing include detection and identification (classification) of an object. Thereby, when an amount of reflected light from an object is small, object detection or classification is stopped, making it possible to prevent false detection or false determination.

In one embodiment, the semiconductor light source may be configured to emit pulsed light, and the light sensor may be configured to detect the reflected light at a timing synchronized with emission of the pulsed light.

In one embodiment, the light sensor may be an image sensor, and the active sensor may be a ToF camera configured to divide a field of view into a plurality of ranges with respect to a depth direction and to change a time difference between light emission and imaging for each range, making it possible to generate a plurality of images corresponding to the plurality of ranges.

In one embodiment, the active sensor may be a light detection and ranging, laser imaging detection and ranging (LIDAR).

(Embodiments)

Hereinafter, favorable embodiments will be described with reference to the drawings. The same or equivalent components, members and processing shown in each drawing are denoted with the same reference numerals, and repeated descriptions will be omitted appropriately. Furthermore, the embodiments are illustrative, not limiting the disclosure, and all features or combinations thereof described in the embodiments are not necessarily essential to the invention.

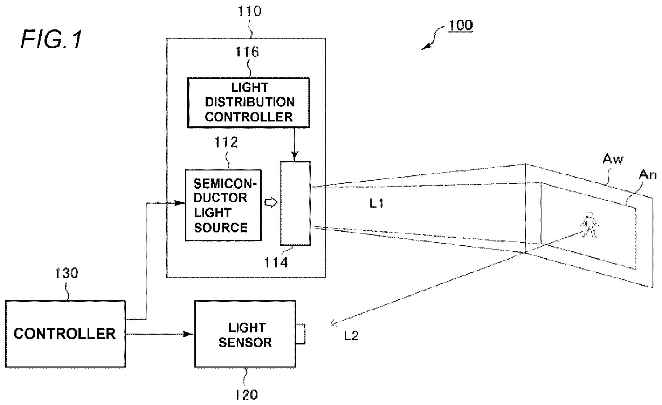

FIG. 1 is a circuit block diagram of an active sensor 100 according to an embodiment. The active sensor 100 is a ToF camera, a LIDAR, or the like, and includes an illumination device 110, a light sensor 120, and a sensing controller 130.

The illumination device 110 includes a semiconductor light source 112, an optical system 114, and a light distribution controller 116. The semiconductor light source 112 includes a laser diode, a light emitting diode (LED), or the like. A wavelength of emitted light from the semiconductor light source 112 is not particularly limited, and the emitted light may be infrared light, visible light, or white light.

The optical system 114 irradiates a controllable irradiation range A with the emitted light from the semiconductor light source 112. In FIG. 1, the irradiation range A is shown as a rectangle, but its shape is not particularly limited and may be an ellipse or another shape. In addition, although two irradiation ranges Aw and An with different areas are shown in FIG. 1, the number of switchable irradiation ranges A is not limited to two. A change in the irradiation range A by the optical system 114 is based on a change in emission angle of light from the optical system 114, and can be realized by changing a composite focal distance of an optical element included in the optical system 114.

The irradiation range A may be switchable in two stages, may be switchable in multiple stages, or may be switchable continuously. The configuration of the optical system 114 is not particularly limited, and may be comprised of a lens optical system, a reflective optical system, or a combination thereof.

The light sensor 120 has sensitivity to the same wavelength as the output light of the semiconductor light source 112. The light sensor 120 detects reflected light L2 from an object OBJ within a sensing range (field of view) of the active sensor 100,the object OBJ reflecting the emitted light (illumination light) L1 of the optical system 114.

The sensing controller 130 integrally controls the active sensor 100. Specifically, light emission from the semiconductor light source 112 of the illumination device 110 and sensing by the light sensor 120 are synchronously controlled.

The light distribution controller 116 controls the optical system 114 so that the irradiation range A is narrowed in accordance with a decrease in the output, that is, light flux of the semiconductor light source 112, The functions of the light distribution controller 116 may be implemented on the same hardware as the sensing controller 130, such as a microcontroller, a central processing unit (CPU), a field programmable gate array (FPGA), or an application specific integrated circuit (ASIC).

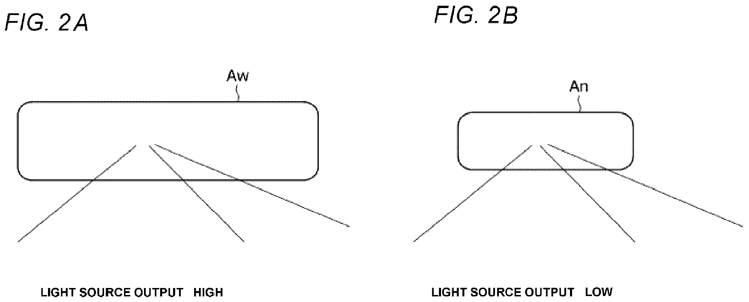

The above is the configuration of the active sensor 100. Subsequently, operations thereof will be described. FIGS.2A and 2B are views illustrating an operation of the active sensor 100 of FIG. 1. Here, a case in which the irradiation range A is switched in two stages, Aw and An, will be described.

When the output of the semiconductor light source 112 is relatively high, the irradiation range Aw of FIG. 2A is selected. When the output of the semiconductor light source 112 is relatively low, the irradiation range An of FIG. 2B is selected. When the output of the semiconductor light source 112 is decreased, a decrease in an amount of light flux per unit area on an object (or on a virtual vertical screen), that is, a decrease in illuminance, can be suppressed by narrowing the irradiation range.

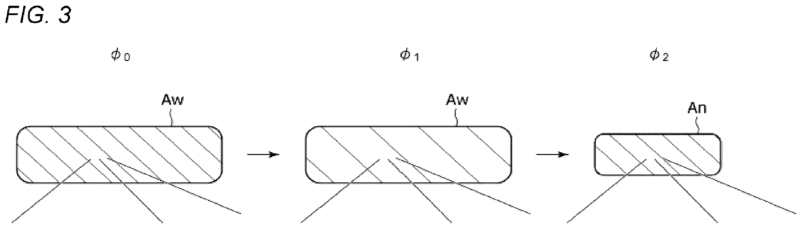

FIG. 3 is a view showing an example of a change in light distribution of the active sensor 100 of FIG. 1. In FIG. 3, a density of hatching within the irradiation range represents the illuminance. In an initial state $\phi_0$, the semiconductor light source 112 emits light at a light flux of the design value, and the wide irradiation range Aw is selected.

In a state $\phi_1$, the light flux of the semiconductor light source 112 is decreased in the state of the wide irradiation range Aw. Thereby, the illuminance in the irradiation range Aw is decreased (hatching becomes rare). In the state $\phi_1$, when an object is present in the field of view, the amount of reflected light from the object is decreased, so the accuracy of sensing is decreased. Therefore, in accordance with the decrease in the light flux of the semiconductor light source 112, the narrow irradiation range An is selected, and the state becomes a state $\phi_2$. In the state $\phi_2$, the light flux of the semiconductor light source 112 is decreased, but the irradiation range An is also narrowed, so the decrease in illuminance can be suppressed compared to the initial state $\phi_0$. Thereby, the decrease in the amount of reflected light from the object is suppressed, and the accuracy of sensing can be improved.

The above is the operation of the active sensor 100. Subsequently, the use of the active sensor 100 will be described. One embodiment of the active sensor 100 is a time of flight (ToF) camera.

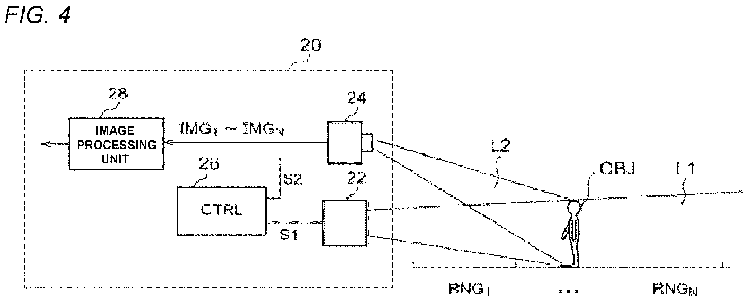

FIG. 4 is a block diagram of a ToF camera 20 according to one embodiment. The ToF camera 20 divides a field of view into N ranges $RNG_1$ to RNGrr (N≥2) with respect to a depth direction, and performs imaging.

The ToF camera 20 includes an illumination device 22, an image sensor 24, a controller 26, and an image processing unit 28. The illumination device 22 corresponds to the illumination device 110 of FIG. 1, the image sensor 24 corresponds to the light sensor 120 of FIG. 1, and the controller 26 corresponds to the sensing controller 130 of FIG. 1.

The illumination device 22 irradiates the front of the vehicle with pulsed illumination light L1 in synchronization with a light emission timing signal S1 provided from the controller 26. The illumination light L1 is preferably infrared light, but is not limited thereto, and may be visible light having a predetermined wavelength. The irradiation range of the illumination light L1 by the illumination device 22 is variable as described above.

The image sensor 24 is configured to be able to perform exposure control in synchronization with an imaging timing signal S2 provided from the controller 26 and to generate a range image IMG. The image sensor 24 has sensitivity to the same wavelength as the illumination light L1 and captures the reflected light (return light) L2 reflected by the object OBJ.

The controller 26 maintains predetermined light emission timing and exposure timing for each range RNG. When imaging any range $RNG_i$, the controller 26 generates a light emission timing signal S1 and an imaging timing signal S2 based on the light emission timing and exposure timing corresponding to the range and performs the imaging. The ToF camera 20 can generate a plurality of range images $IMG_1$ to $IMG_N$ corresponding to the plurality of ranges $RNG_1$ to $RNG_N$. In an i-th range image $IMG_i$, an object included in the corresponding range $RNG_i$ appears.

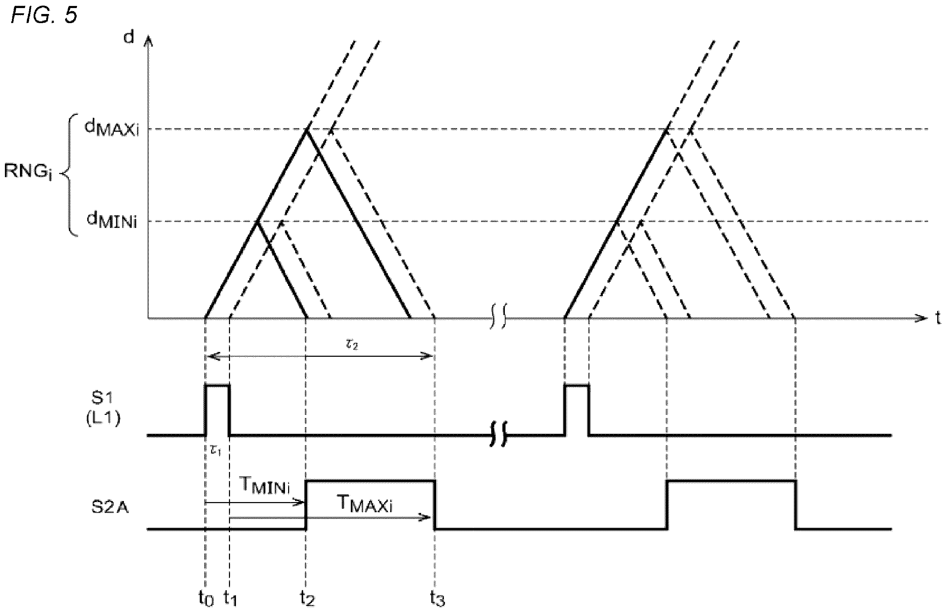

FIG. 5 is a view illustrating an operation of the ToF camera 20. FIG. 5 shows an aspect when measuring the i-th range $RNG_i$. The illumination device 22 emits light during a light emission period $\tau_1$ between time to and time $t_1$ in synchronization with the light emission timing signal S1. At the top, a diagram of a light beam where a time is indicated on the horizontal axis and a distance is indicated on the vertical axis is shown. A distance from the ToF camera 20 to a front side boundary of the range $RNG_i$ is set to $d_{MINi}$ and a distance from the ToF camera to a deep side boundary of the range $RNG_i$ is set to $d_{MAXi}$.

Round-trip time $T_{MINi}$ from when light emitted from the illumination device 22 at a certain time point reaches the distance $d_{MINi}$ to when reflected light returns to the image sensor 24 is expressed as $T_{MINi}=2\times d_{MINi}/c$, in which c is the speed of light.

Similarly, round-trip time $T_{MAXi}$ from when light emitted from the illumination device 22 at a certain time point reaches the distance $d_{MAXi}$ to when reflected light returns to the image sensor 24 is expressed as

$$T_{MAXi}=2\times d_{MAXi}/c.$$

When it is desired to image the object OBJ included in the range $RNG_i$, the controller 26 generates the imaging timing signal S2 so that the exposure starts at a time point $t_2 =t_0 + T_{MINi}$ and ends at a time point $t_3 = t_1 + T_{MAXi}$. This is one exposure operation.

When imaging the i-th range $RNG_i$, the light emission and the exposure are repeatedly performed multiple times, and measurement results are integrated by the image sensor 24.

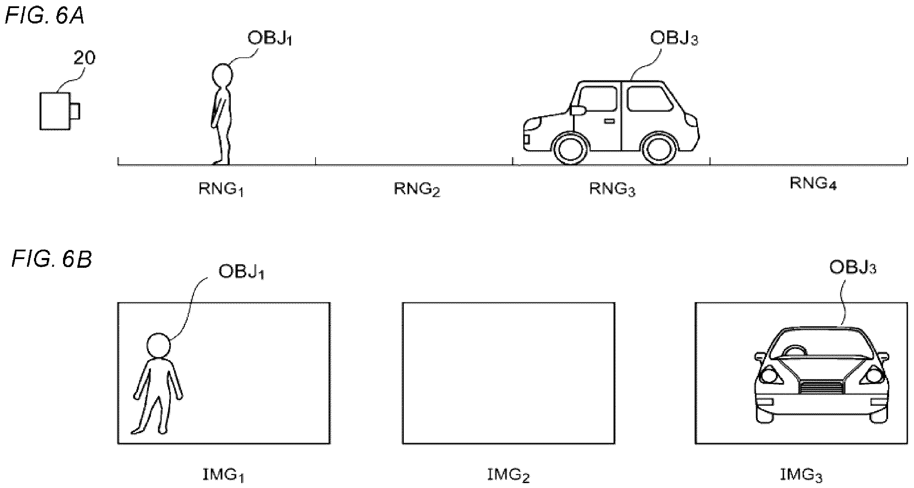

FIGS. 6A and 6B are views illustrating images obtained by the ToF camera 20. In an example of FIG. 6A, an object (pedestrian) $OBJ_1$ is present in the range $RNG_1$ and an object (vehicle) $OBJ_3$ is present in the range $RNG_3$. FIG. 6B shows a plurality of range images $IMG_1$ to $IMG_3$ obtained in the situation of FIG. 6A. When capturing the range image $IMG_1$, an object image $OBJ_1$ of the pedestrian $OBJ_1$ appears in the range image $IMG_1$ because the image sensor is exposed only to reflected light from the range $RNG_1$.

When capturing the range image $IMG_2$, no object image appears in the range image $IMG_2$ because the image sensor is exposed to reflected light from the range $RNG_2$.

Similarly, when capturing the range image $IMG_3$, only the object image $OBJ_3$ appears in the range image $IMG_3$ because the image sensor is exposed to reflected light from the range $RNG_3$. In this way, an object can be separately captured for each range by the ToF camera 20.

The above is the operation of the ToF camera 20. In the ToF camera 20, the illuminance within the irradiation range A can be prevented from being extremely decreased by controlling the irradiation range A by the illumination device 22 in accordance with the output of the semiconductor light source. Thereby, even when the output of the semiconductor light source is decreased, pixel values of the object captured in the range image IMG become larger (i.e., brighter) and deterioration in an image quality is suppressed.

Subsequently, a specific configuration example of the active sensor 100 will be described.

(First Embodiment)

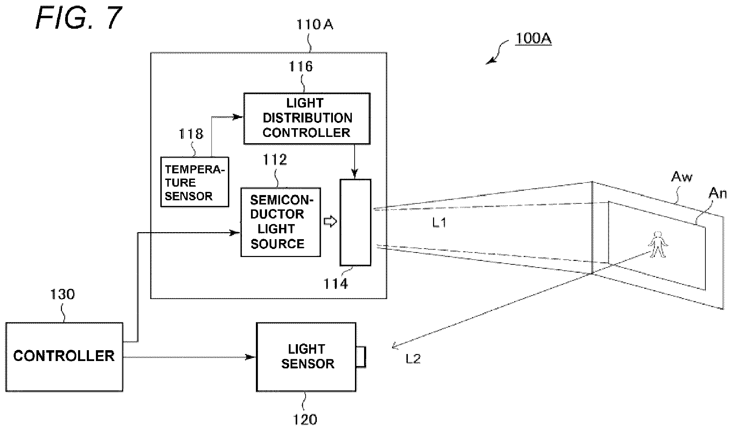

FIG. 7 is a block diagram of an active sensor 100A according to a first embodiment. An illumination device 110A includes a temperature sensor 118. The temperature sensor 118 is arranged to be able to detect a temperature of the semiconductor light source 112. For the temperature sensor 118, a thermistor, a thermocouple, or the like can be used.

The light distribution controller 116 controls the optical system 114 based on the temperature of the semiconductor light source 112 detected by the temperature sensor 118. Specifically, the light distribution controller 116 narrows the irradiation range A as the temperature of the semiconductor light source 112 rises. For a semiconductor light source such as a laser diode, the light flux when the same power is input is decrease as the temperature rises.

For example, the light distribution controller 116 may select the wide irradiation range Aw when the temperature is lower than a predetermined threshold value, and may switch the irradiation range to the narrow irradiation range An when the temperature exceeds the threshold value.

For example, an area of the narrow irradiation range An is assumed to be K times an area of the wide irradiation range Aw (K<1). In this case, a temperature at which the output (light flux or luminance) of the semiconductor light source 112 is 1/K times that at the room temperature is determined in advance, and the threshold value can be determined based on the temperature.

When the irradiation range A is continuously variable, the irradiation range A may be gradually narrowed as the temperature rises.

(Second Embodiment)

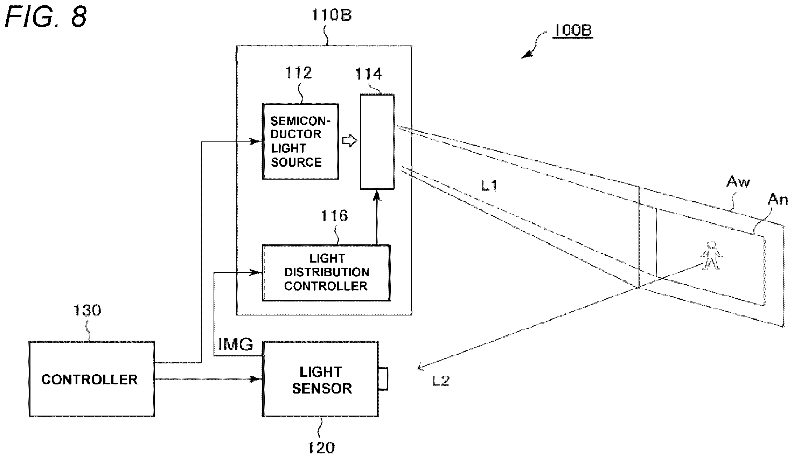

FIG. 8 is a block diagram of an active sensor 100B according to a second embodiment. The light distribution controller 116 of an illumination device 110B controls the irradiation range A based on the output of the light sensor 120.

The light sensor 120 may be specifically an image sensor. The light distribution controller 116 controls the irradiation range A based on pixel values of the image data IMG generated by the image sensor. When the active sensor 100B is the ToF camera 20, the irradiation range A may be controlled based on all range images, or the irradiation range A may be controlled based on a range image corresponding to a specific range.

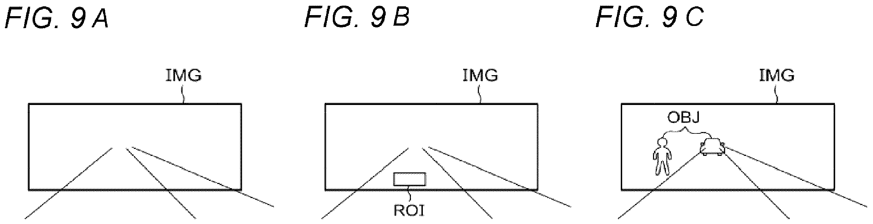

FIGS. 9A to 9C are views illustrating examples of control of the irradiation range based on the image data IMG.

Referring to FIG. 9A, when the illuminance of the illumination light L1 is decreased, the image data IMG based on the reflected light thereof becomes dark as a whole. Therefore, the light distribution controller 116 can estimate a decrease in the output of the semiconductor light source 112 and control the irradiation range A based on a sum or average value of pixel values of all pixels of the image data IMG. For example, when the sum or average value of pixel values becomes lower than a predetermined threshold value, the irradiation range A is narrowed.

In addition, when the sum or average value of pixel values exceeds a first threshold value in a state in which the irradiation range A is narrowed, the irradiation range A may be returned to its original state. Alternatively, when a predetermined time has elapsed after narrowing the irradiation range A, the irradiation range may be returned to the original wide range.

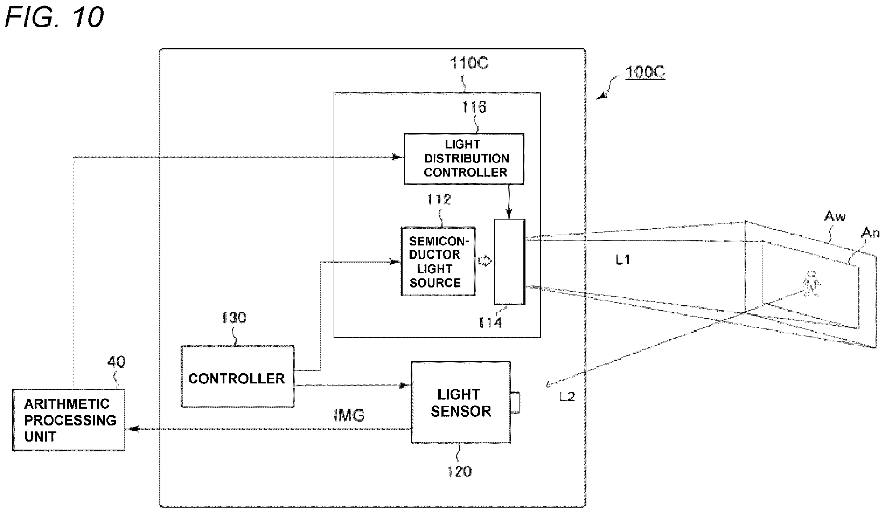

When the output (pixel value) of the light sensor 120 is below a second threshold value after narrowing the irradiation range A to a limit, an arithmetic processing device (not shown in FIG. 8, for example, an arithmetic processing device in FIG. 10) at a subsequent stage of the active sensor 100B preferably stops arithmetic processing based on the output of the active sensor 100B. In this situation, since an amount of reflected light from an object is small, object detection or classification is stopped, making it possible to prevent false detection or false determination.

Note that even while the s arithmetic processing at the subsequent stage is stopped, sensing by the active sensor 100B continues. When the output of the light sensor 120 exceeds the second threshold value, the arithmetic processing at the subsequent stage is restarted.

In an example of FIG. 9B, the light distribution controller 116 controls the irradiation range A based on pixel values of a predetermined region of interest ROI in the image data IMG. As for the predetermined region ROI, a region where an object with a known reflectance is likely to be captured is preferably selected. For example, in a region below an image, a road surface will be highly likely to be captured, and the reflectance of the road surface is generally constant. Therefore, pixels where the road surface is captured may be monitored, and the irradiation range A may be controlled based on the pixel values.

In an example of FIG. 9C, the light distribution controller 116 analyzes the image data IMG and detects an object OBJ. The irradiation range A may be controlled based on pixel values of pixels where a specific object OBJ is captured. For example, the specific object OBJ includes a car, a person, a road sign, a delineator, and a road surface.

In the example of FIG. 9C, an amount of light detected by the light sensor 120 changes in accordance with the illuminance of an object surface and a distance to the object. Therefore, the light distribution controller 116 may control the irradiation range A in accordance with the pixel values of the detected object and the distance to the object. When the active sensor 100B is the ToF camera 20, information about the distance to the object can be easily estimated from the range number. Even when the active sensor 100B is a LiDAR or ToF camera, the distance to the object can be easily determined.

When the active sensor 100B cannot obtain distance information like a ToF camera, a distance to the object may be estimated based on the number of pixels of the object included in the image.

Alternatively, the light distribution controller 116 may detect an object present at a specific distance from the active sensor 100 and control the irradiation range based on pixel values of the object.

(Third Embodiment)

FIG. 10 is a block diagram of an active sensor 100C according to a third embodiment. In the active sensor 100C, the light sensor 120 is an image sensor and generates image data IMG. The arithmetic processing device 40 processes the image data IMG and detects a position of the object and a type of the object. The arithmetic processing device 40 may include, for example, a classifier or identifier including a learned model.

The arithmetic processing device 40 supplies the light distribution controller 116 with information regarding a success or fail of object detection or an identification rate in the arithmetic processing device 40. When an object cannot be detected normally in the arithmetic processing device 40, the light distribution controller 116 may estimate that the illuminance has decreased and narrow the irradiation range A. The light distribution controller 116 may be provided in the arithmetic processing device 40.

Thereby, when the amount of reflected light from an object is small, object detection, classification, and identification is stopped, making it possible to prevent false detection or false determination.

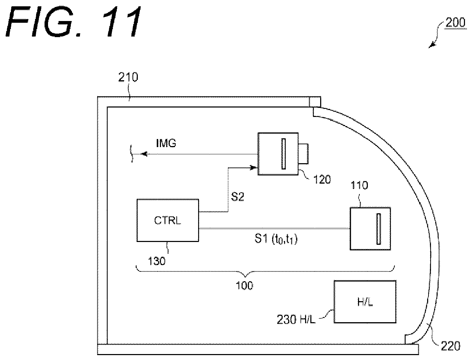

FIG. 11 is a view showing a vehicle lamp 200 with a built-in active sensor 100. The vehicle lamp 200 includes a housing 210, an outer lens 220, lamp units 230H/230L for high beam and low beam, and an active sensor 100. The lamp units 230H/230L and the active sensor 100 are accommodated in the housing 210.

Note that a part of the active sensor 100, for example, the light sensor 120 may be installed outside the vehicle lamp 200, for example, behind a room mirror.

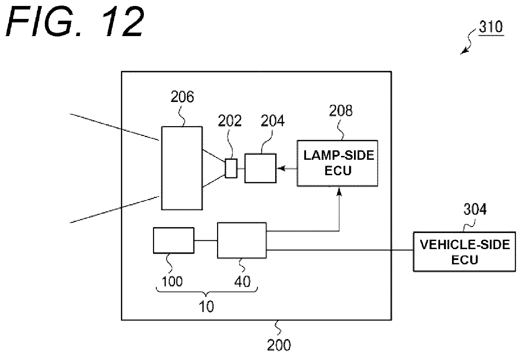

FIG. 12 is a block diagram showing a vehicle lamp 200 including an object identification system 10. The vehicle lamp 200 configures a lamp system 310 together with a vehicle-side ECU 304. The vehicle lamp 200 includes a light source 202, a lighting circuit 204, and an optical system 206. Further, the vehicle lamp 200 includes an object identification system 10. The object identification system 10 includes the active sensor 100 and the arithmetic processing device 40.

The arithmetic processing device 40 is configured to be able to identify a type of an object based on an image obtained by the active sensor 100.

The arithmetic processing device 40 may be implemented by a combination of a processor (hardware) such as a central processing unit (CPU), a micro processing unit (MPU) and a microcomputer and a software program executed by the processor (hardware). The arithmetic processing device 40 may be a combination of a plurality of processors. Alternatively, the arithmetic processing device 40 may be configured by only hardware.

Information about the object OBJ detected by the arithmetic processing device 40 may be used for light distribution control of the vehicle lamp 200. Specifically, a lamp-side ECU 208 generates a proper light distribution pattern based on information about a type and a position of the object OBJ generated by the arithmetic processing device 40. The lighting circuit 204 and the optical system 206 operate so that the light distribution pattern generated by the lamp-side ECU 208 is obtained.

Furthermore, the information about the object OBJ detected by the arithmetic processing device 40 may be transmitted to the vehicle-side ECU 304. The vehicle-side ECU may perform automatic driving based on the information.

It is understood by one skilled in the art that the above-described embodiments are illustrative and various variations can be made to combinations of each component or each processing process. In the below, such variations will be described.

(Variation 1)

The active sensor 100 is not limited to the ToF camera, and may be a light detection and ranging, laser imaging detection and ranging (LiDAR). Alternatively, the active sensor 100 may be a single pixel imaging device (quantum radar) using correlation calculation.

It should be understood by one skilled in the art that the embodiments are merely illustrative, various variations can be made to combinations of components and processing processes in the embodiments and such variations also fall within the scope of the present invention.

INDUSTRIAL APPLICABILITY

The present disclosure relates to an active sensor.

REFERENCE SIGNS LIST

10: object identification system
OBJ: object

20: ToF camera
22: illumination device
24: image sensor
26: controller
S1: light emission timing signal
S2: imaging timing signal
40: arithmetic processing device
100: active sensor
110: illumination device
112: semiconductor light source
114: optical system
116: light distribution controller
118: temperature Senser
120: light sensor
130: sensing controller
200: vehicle lamp
202: light source
204: lighting circuit
206: optical system
310: lamp system
304: vehicle-side ECU

**Claims**

1. An active sensor comprising:

   a semiconductor light source;
   an optical system configured to irradiate a controllable irradiation range with emitted light from the semiconductor light source;
   a light sensor configured to detect reflected light from an object that reflects the emitted light of the optical system; and
   a light distribution controller configured to control the optical system so that the irradiation range is narrowed in accordance with a decrease in an output of the semiconductor light source.

2. The active sensor according to claim 1, wherein the light distribution controller is configured to narrow the irradiation range as a temperature of the semiconductor light source rises.

3. The active sensor according to claim 1, wherein the light distribution controller is configured to narrow the irradiation range in accordance with a decrease in output of the light sensor.

4. The active sensor according to claim 3, wherein the light distribution controller widens the irradiation range when the output of the light sensor exceeds a first threshold value after narrowing the irradiation range.

5. The active sensor according to claim 3 or 4, wherein an arithmetic processing device at a subsequent stage of the active sensor stops arithmetic processing based on an output of the active sensor, when the output of the light sensor is below a second threshold value after narrowing the irradiation range to a limit.

6. The active sensor according to any one of claims 1 to 5,

   wherein the semiconductor light source is configured to emit pulsed light, and
   wherein the light sensor is configured to detect the reflected light at a timing synchronized with emission of the pulsed light.

7. The active sensor according to any one of claims 1 to 6,

   wherein the light sensor is an image sensor, and
   wherein the active sensor is a time of flight camera configured to divide a field of view into a plurality of ranges with respect to a depth direction and to change a time difference between light emission and imaging for each range, making it possible to generate a plurality of images corresponding to the plurality of ranges.

8. An object identification system comprising:

   the active sensor according to any one of claims 1 to 7; and
   an arithmetic processing device configured to be able to identify a type of an object based on an image obtained by the active sensor.

9. A vehicle lamp comprising the object identification system according to claim 8.

FIG.1

*FIG. 2A*

Aw

LIGHT SOURCE OUTPUT   HIGH

*FIG. 2B*

An

LIGHT SOURCE OUTPUT   LOW

EP 4 428 569 A1

FIG. 3

FIG. 4

FIG. 5

EP 4 428 569 A1

FIG. 6A

OBJ₁

OBJ₃

20

RNG₁          RNG₂          RNG₃          RNG₄

FIG. 6B

OBJ₁

OBJ₃

IMG₁          IMG₂          IMG₃

FIG. 7

FIG. 8

FIG. 9 A

FIG. 9 B

FIG. 9 C

*FIG. 10*

# FIG. 11

200

210

IMG

120

110

S2

CTRL

130

S1 $(t_0,t_1)$

100

H/L

230 H/L

220

# FIG. 12

310

206

202 204 208

LAMP-SIDE
ECU

304

VEHICLE-SIDE
ECU

100 40

10

200

## INTERNATIONAL SEARCH REPORT

| International application No. |
|---|
| **PCT/JP2022/040808** |

**A. CLASSIFICATION OF SUBJECT MATTER**

*G01S 7/497*(2006.01)i; *G01S 7/484*(2006.01)i; *G01S 17/931*(2020.01)i
FI:    G01S7/497; G01S7/484; G01S17/931

According to International Patent Classification (IPC) or to both national classification and IPC

**B. FIELDS SEARCHED**

Minimum documentation searched (classification system followed by classification symbols)

G01S7/48-7/51; G01S17/00-17/95;

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 07-159538 A (COPAL CO LTD) 23 June 1995 (1995-06-23) entire text, all drawings | 1-9 |
| A | JP 2018-205042 A (NIPPON SIGNAL CO LTD) 27 December 2018 (2018-12-27) entire text, all drawings | 1-9 |
| A | JP 07-134178 A (OMRON CORP) 23 May 1995 (1995-05-23) entire text, all drawings | 1-9 |
| A | US 8213022 B1 (RIZA, Nabeel A. et al.) 03 July 2012 (2012-07-03) entire text, all drawings | 1-9 |

☐ Further documents are listed in the continuation of Box C.          ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 December 2022** | **27 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

PCT/JP2022/040808

| Patent document cited in search report | | | Publication date (day/month/year) | Patent family member(s) | Publication date (day/month/year) |
|---|---|---|---|---|---|
| JP | 07-159538 | A | 23 June 1995 | (Family: none) | |
| JP | 2018-205042 | A | 27 December 2018 | (Family: none) | |
| JP | 07-134178 | A | 23 May 1995 | (Family: none) | |
| US | 8213022 | B1 | 03 July 2012 | (Family: none) | |

Form PCT/ISA/210 (patent family annex) (January 2015)